# EUROPEAN PATENT APPLICATION

(11) **EP 2 477 174 A1**
(43) Date of publication of application: **18.07.2012**
(21) Application number: 10823192.9
(22) Date of filing: 13.10.2010
(51) Int. Cl.: G09G 3/28, G02B 27/22, G09G 3/20, H04N 13/04

(54) **PLASMA DISPLAY DEVICE DRIVE METHOD, PLASMA DISPLAY DEVICE AND PLASMA DISPLAY SYSTEM**

(30) Priority: 13.10.2009 JP 2009236381
(71) Applicant: Panasonic Corporation, Kadoma-shi Osaka 571-8501 (JP)
(72) Inventor: ORIGUCHI, Takahiko, Osaka-shi, Osaka 540- 6207 (JP); SHIOZAKI, Yuya, Osaka-shi, Osaka 540- 6207 (JP); KIGO, Shigeo, Osaka-shi, Osaka 540- 6207 (JP); SHOJI, Hidehiko, Osaka-shi, Osaka 540- 6207 (JP); ISHIZUKA, Mitsuhiro, Osaka-shi, Osaka 540- 6207 (JP)
(74) Representative: Vigand, Philippe
(86) International application number: PCT/JP2010/006074
(87) International publication number: WO 2011/045924

(57) **Abstract**

Crosstalk between right-eye images and left-eye images is suppressed, and high-quality 3D images are displayed. For this purpose, a driving method of a plasma display apparatus is provided. The plasma display apparatus has a plasma display panel and a driver circuit for driving the panel. In this driving method, right-eye images and left-eye images are alternately displayed on the panel by alternately repeating right-eye fields, each of which has a plurality of subfields and displays a right-eye image signal, and left-eye fields, each of which has a plurality of subfields and displays a left-eye image signal. Each subfield has an address period for performing an address operation and a sustain period for performing a sustain operation. In a discharge cell where gradation of a predetermined threshold or higher is displayed, the address operation is prohibited in the subfield disposed last in the field.

## Description

### TECHNICAL FIELD

The present invention relates to a driving method of a plasma display apparatus, a plasma display apparatus, and a plasma display system that alternately display, on a plasma display panel, a left-eye image and a right-eye image capable of being three-dimensionally (3D) viewed using shutter glasses.

### BACKGROUND ART

An alternating-current surface discharge type panel typical as a plasma display panel (hereinafter referred to as "panel") has many discharge cells between a front substrate and a rear substrate that are faced to each other. The front substrate has a plurality of display electrode pairs each of which is formed of a pair of scan electrode and sustain electrode. The rear substrate has a plurality of data electrodes. Ultraviolet rays are generated by gas discharge in the discharge cells, and respective phosphors of red, green, and blue are exited to emit light with the ultraviolet rays, thereby providing color display.

A subfield method is generally used as a method of driving the panel. In this method, one field period is divided into a plurality of subfields, and the subfields in which light is emitted are combined, thereby performing gradation display. Each subfield includes an initializing period, an address period, and a sustain period.

In the initializing period, an initializing operation of causing initializing discharge and producing wall charge required for the subsequent address operation is performed. The initializing operation includes a forced initializing operation of causing initializing discharge regardless of the operation in the immediately preceding subfield, and a selective initializing operation of causing initializing discharge only in the discharge cell that has undergone address discharge in the immediately preceding subfield.

In the address period, address discharge is selectively caused in a discharge cell according to an image to be displayed to produce wall charge.

In the sustain period, sustain pulses are alternately applied to scan electrodes and sustain electrodes to cause sustain discharge, and light is emitted in a phosphor layer in the corresponding discharge cell, thereby displaying an image. The light emission in the phosphor layer by the sustain discharge is related to the gradation display, and the light emission following the forced initializing operation is not related to the gradation display.

As one of subfield methods, a driving method has been studied in which the luminance in displaying black as the lowest gradation is reduced, the light emission that is not related to the gradation display is reduced as much as possible, and the contrast is improved. For example, Patent Literature 1 discloses a driving method in which the frequency of forced initializing operations is set at one per field and the forced initializing operation is performed using a gently varying ramp waveform voltage.

Methods of displaying a 3D image using such a panel have been also studied. As one of methods, a method is known in which a plurality of subfields are classified into a subfield group for displaying a right-eye image and a subfield group for displaying a left-eye image, and the shutters of shutter glasses are opened and closed synchronously with the start of the address period of the initial subfield of each subfield group (for example, Patent Literature 2).

In order to perform 3D vision by such a method, an image seen by the right eye is required to be different from an image seen by the left eye. For this purpose, shutter glasses having a right-eye shutter and a left-eye shutter are used. In a displaying period of the right-eye image, the right-eye shutter is opened and the left-eye shutter is closed, thereby disabling the left eye from seeing the right-eye image. In a displaying period of the left-eye image, the left-eye shutter is opened and the right-eye shutter is closed, thereby disabling the right eye from seeing the left-eye image.

However, phosphors used for the panel have a long afterglow time, and a phosphor material having characteristics where afterglow continues for several milliseconds after the completion of the sustain discharge also exists. Therefore, for example, also after the completion of the displaying period of the right-eye image, the right-eye image is displayed for some time. The phenomenon where the image is displayed also after the completion of the displaying period is referred to as "after-image".

When a left-eye image is displayed before the after-image of a right-eye image disappears, the phenomenon where the right-eye image mixes with the left-eye image occurs. When a right-eye image is displayed before the after-image of a left-eye image disappears, the phenomenon where the left-eye image mixes with the right-eye image occurs. Such a phenomenon is referred to as "crosstalk". When the crosstalk occurs, the 3D vision becomes difficult, disadvantageously.

### CITATION LIST

### Patent Literature

### PTL 1

Unexamined Japanese Patent Publication No. 2000-242224

### PTL 2

Unexamined Japanese Patent Publication No. 2000-112428

### SUMMARY OF THE INVENTION

The present invention provides a driving method of a plasma display apparatus. The plasma display apparatus has a panel having a plurality of discharge cells including a scan electrode, a sustain electrode, and a data electrode, and has a driver circuit for driving the panel. In this driving method, right-eye fields, each of which has a plurality of subfields and displays a right-eye image signal, and left-eye fields, each of which has a plurality of subfields and displays a left-eye image signal, are alternately repeated, thereby alternately displaying right-eye images and left-eye images on the panel. Each of the subfields has an address period for performing an address operation and a sustain period for performing a sustain operation. In a discharge cell where gradation of a predetermined threshold or higher is displayed, the address operation is prohibited in the subfield disposed last in the field.

This method can provide a plasma display apparatus that can suppress crosstalk between the right-eye images and left-eye images and can display high-quality 3D images.

The present invention provides a plasma display apparatus that has a panel having a plurality of discharge cells including a scan electrode, a sustain electrode, and a data electrode, and has a driver circuit for driving the panel. The driver circuit alternately repeats right-eye fields, each of which has a plurality of subfields and displays a right-eye image signal, and left-eye fields, each of which has a plurality of subfields and displays a left-eye image signal, thereby alternately displaying right-eye images and left-eye images on the panel. Each of the subfields has an address period for performing an address operation and a sustain period for performing a sustain operation. In a discharge cell where gradation of a predetermined threshold or higher is displayed, the address operation is prohibited in the subfield disposed last in the field.

This configuration can provide a plasma display apparatus that can suppress crosstalk between the right-eye images and left-eye images and can display high-quality 3D images.

A plasma display system of the present invention includes shutter glasses and the above-mentioned plasma display apparatus. The shutter glasses have a receiving section for receiving a timing signal output from a timing signal output section, a right-eye shutter, and a left-eye shutter, and open and close the right-eye shutter and the left-eye shutter based on the timing signal output from the timing signal output section.

### BRIEF DESCRIPTION OF DRAWINGS

Fig. 1 is an exploded perspective view showing a structure of a panel used in a first exemplary embodiment of the present invention.
Fig. 2 is an electrode array diagram of the panel used in the first exemplary embodiment of the present invention.
Fig. 3 is a circuit block diagram of a plasma display apparatus and a diagram showing one example of a plasma display system in accordance with the first exemplary embodiment of the present invention.
Fig. 4 is a waveform chart of driving voltage to be applied to each electrode of the panel in accordance with the first exemplary embodiment of the present invention.
Fig. 5 is a pattern diagram showing a subfield structure in accordance with the first exemplary embodiment of the present invention.
Fig. 6 is a diagram showing coding in accordance with the first exemplary embodiment of the present invention.
Fig. 7 is a diagram showing coding in accordance with a second exemplary embodiment of the present invention.
Fig. 8 is a pattern diagram showing a subfield structure in accordance with a third exemplary embodiment of the present invention.
Fig. 9 is a diagram showing coding in accordance with the third exemplary embodiment of the present invention.

### DESCRIPTION OF EMBODIMENTS

A plasma display apparatus in accordance with exemplary embodiments of the present invention will be described hereinafter with reference to the accompanying drawings.

### FIRST EXEMPLARY EMBODIMENT

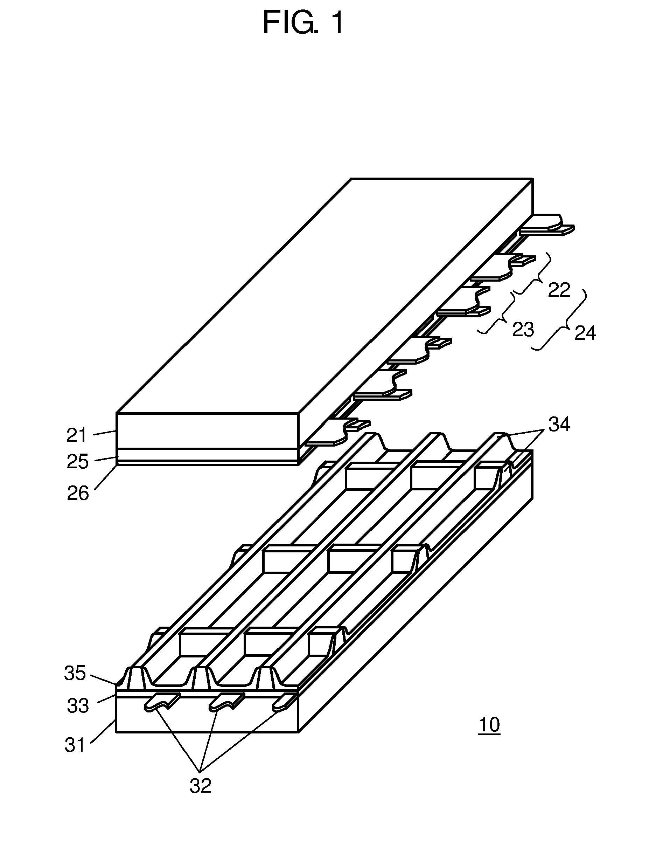

Fig. 1 is an exploded perspective view showing the structure of panel 10 used in a plasma display apparatus in accordance with a first exemplary embodiment of the present invention. A plurality of display electrode pairs 24 formed of scan electrodes 22 and sustain electrodes 23 is disposed on glass-made front substrate 21. Dielectric layer 25 is formed so as to cover display electrode pairs 24, and protective layer 26 is formed on dielectric layer 25. A plurality of data electrodes 32 is formed on rear substrate 31, dielectric layer 33 is formed so as to cover data electrodes 32, and mesh barrier ribs 34 are formed on dielectric layer 33. Phosphor layers 35 for emitting lights of red, green, and blue are disposed on the side surfaces of barrier ribs 34 and on dielectric layer 33. In phosphor layers 35, BaMgAl₁₀O₁₇:Eu is used as a blue phosphor, Zn₂SiO₄:Mn is used as a green phosphor, and (Y,Gd)B0₃:Eu is used as a red phosphor. However, the present invention is not limited to these phosphors.

Front substrate 21 and rear substrate 31 are faced to each other so that display electrode pairs 24 cross data electrodes 32 with a micro discharge space sandwiched between them, and the outer peripheries of them are sealed by a sealing material such as glass frit. The discharge space is filled with mixed gas of neon and xenon as discharge gas, for example. The discharge space is partitioned into a plurality of sections by barrier ribs 34. Discharge cells are formed in the intersecting parts of display electrode pairs 24 and data electrodes 32. The discharge cells discharge and emit light to display an image.

The structure of panel 10 is not limited to the above-mentioned one, but may be a structure having striped barrier ribs, for example.

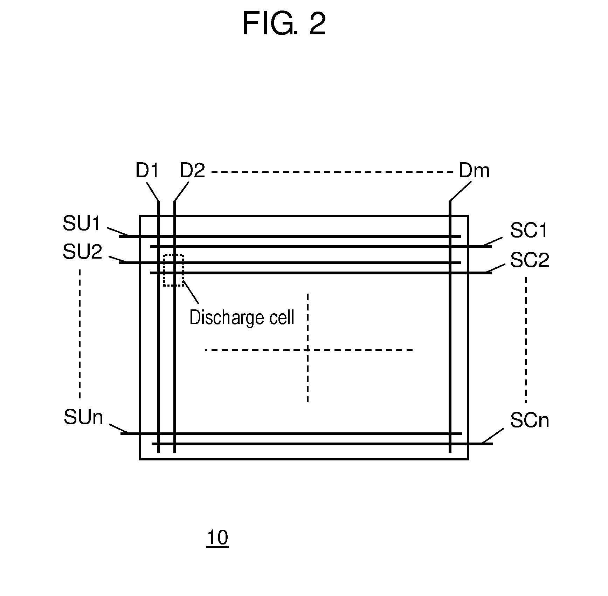

Fig. 2 is an electrode array diagram of panel 10 used in the plasma display apparatus in accordance with the first exemplary embodiment of the present invention. Panel 10 has n scan electrode SC1 through scan electrode SCn (scan electrodes 22 in Fig. 1) and n sustain electrode SU1 through sustain electrode SUn (sustain electrodes 23 in Fig. 1) both extended in the row direction, and m data electrode D 1 through data electrode Dm (data electrodes 32 in Fig. 1) extended in the column direction. A discharge cell is formed in the part where a pair of scan electrode SCi (i is 1 through n) and sustain electrode SUi intersect with one data electrode Dj (j is 1 through m). Thus, mxn discharge cells are formed in the discharge space. For example, a red phosphor as phosphor layer 35 is applied to a discharge cell having data electrode Dp (p=3×q: q is an integer equal to or smaller than m/3), a green phosphor as phosphor layer 35 is applied to a discharge cell having data electrode Dp+1, and a blue phosphor as phosphor layer 35 is applied to a discharge cell having data electrode Dp+2.

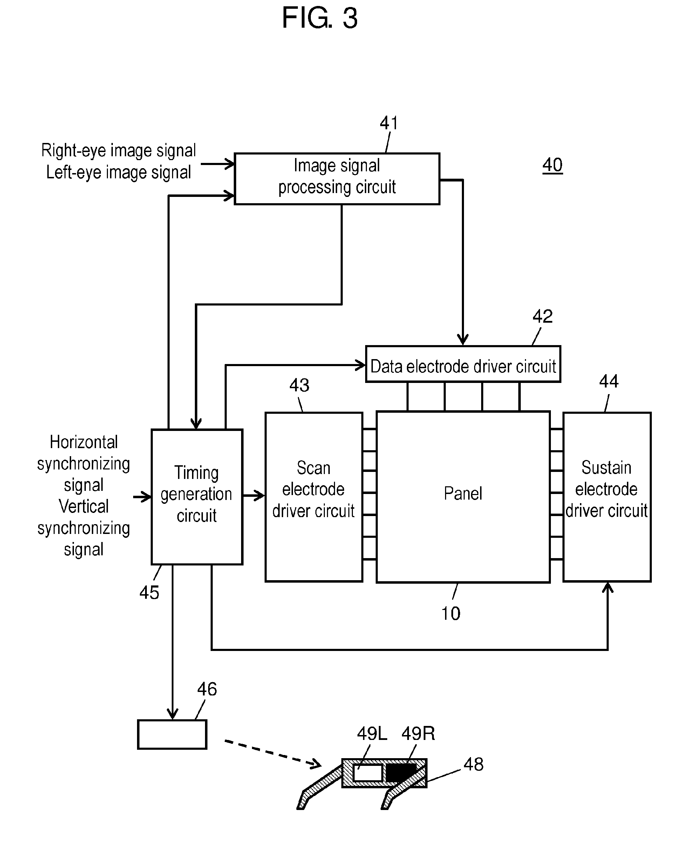

Fig. 3 is a circuit block diagram of plasma display apparatus 40 and a diagram showing one example of a plasma display system in accordance with the first exemplary embodiment of the present invention. Plasma display apparatus 40 has panel 10 having a plurality of discharge cells having scan electrode 22, sustain electrode 23, and data electrode 32, and a driver circuit for driving panel 10. The driver circuit includes the following elements:
image signal processing circuit 41;
data electrode driver circuit 42;
scan electrode driver circuit 43;
sustain electrode driver circuit 44;
timing generation circuit 45; and
a power supply circuit (not shown) for supplying required power to each circuit block.

Plasma display apparatus 40 includes shutter glasses 48 used by a user, and timing signal output section 46 for outputting a timing signal for opening/closing shutters to shutter glasses 48.

Image signal processing circuit 41 alternately inputs a right-eye image signal and left-eye image signal for each field. Image signal processing circuit 41 converts the input right-eye image signal into right-eye image data that indicates light emission or no light emission in each subfield, and converts the input left-eye image signal into left-eye image data that indicates light emission or no light emission in each subfield. Data electrode driver circuit 42 converts the right-eye image data and the left-eye image data into an address pulse corresponding to each of data electrode D1 through data electrode Dm, and applies the address pulse to each of data electrode D 1 through data electrode Dm.

Timing generation circuit 45 generates various timing signals for controlling operations of respective circuit blocks based on a horizontal synchronizing signal and a vertical synchronizing signal, and supplies the generated timing signals to respective circuit blocks. Timing generation circuit 45 outputs a timing signal for opening or closing the shutters of shutter glasses 48 to timing signal output section 46.

Timing signal output section 46, using a light emitting element such as a light emitting diode (LED), converts the timing signal into an infrared signal, for example, and supplies the signal to shutter glasses 48.

Scan electrode driver circuit 43 applies a driving voltage waveform to each of scan electrodes 22 based on the timing signal.

Sustain electrode driver circuit 44 applies a driving voltage waveform to sustain electrodes 23 based on the timing signal.

Shutter glasses 48 have a receiving section for receiving the timing signal output from timing signal output section 46, right-eye liquid crystal shutter 49R, and left-eye liquid crystal shutter 49L, and open and close right-eye liquid crystal shutter 49R and left-eye liquid crystal shutter 49L based on the timing signal.

Next, a driving voltage waveform and operation for driving panel 10 are described. Plasma display apparatus 40 displays gradation by a subfield method in which the plasma display apparatus divides one field into a plurality of subfields and controls light emission and no light emission of each discharge cell in each subfield. In the present embodiment, a user views the images that are displayed on panel 10 by alternate repetition of right-eye fields and left-eye fields, using shutter glasses 48 for opening and closing the shutters synchronously with the right-eye fields and left-eye fields. Here, each right-eye field has a plurality of subfields and displays a right-eye image signal, and each left-eye field has a plurality of subfields and displays a left-eye image signal. Thus, the user three-dimensionally views the images displayed on panel 10. In the present embodiment, in order to allow the user to view 3D images having no flicker, the field frequency is set at 120 Hz, twice the normal frequency.

The right-eye field is different from the left-eye field only in a displayed image signal. The right-eye field and the left-eye field have the same field structure, such as the number of subfields constituting the field, the luminance weight of each subfield, and the array of the subfields. Therefore, the structure of one field and the driving voltage waveform applied to each electrode are firstly described.

Each field has a plurality of subfields, and each subfield has an initializing period, an address period, and a sustain period.

In the initializing period, an initializing operation of causing initializing discharge and producing wall charge required for the subsequent address discharge on each electrode is performed. This initializing operation includes a forced initializing operation of forcibly causing initializing discharge regardless of the existence of previous discharge, and a selective initializing operation of selectively causing initializing discharge only in the discharge cell that has undergone address discharge in the immediately preceding subfield.

In the address period, an address operation of causing address discharge in a discharge cell to emit light to produce wall charge is performed.

In the sustain period, a sustain operation of alternately applying as many sustain pulses as the number corresponding to the luminance weight to display electrode pairs 24, causing sustain discharge in a discharge cell having undergone the address discharge, and causing the discharge cell to emit light is performed.

In the present exemplary embodiment, one field is divided into five subfields (SF1, SF2, SF3, SF4, SF5). A forced initializing operation is performed in the initializing period of SF1, which is the subfield disposed firstly in the field. A selective initializing operation is performed in the initializing periods of SF2 through SF5, which are subfields arranged subsequently. Respective subfields have luminance weights of (16, 8, 4, 2, 1). In the present exemplary embodiment, the subfield of the largest luminance weight is disposed firstly in the field, the subsequent subfields are arranged in descending order of the luminance weight from the second-largest luminance weight. The subfield of the smallest luminance weight is thus disposed last in the field,

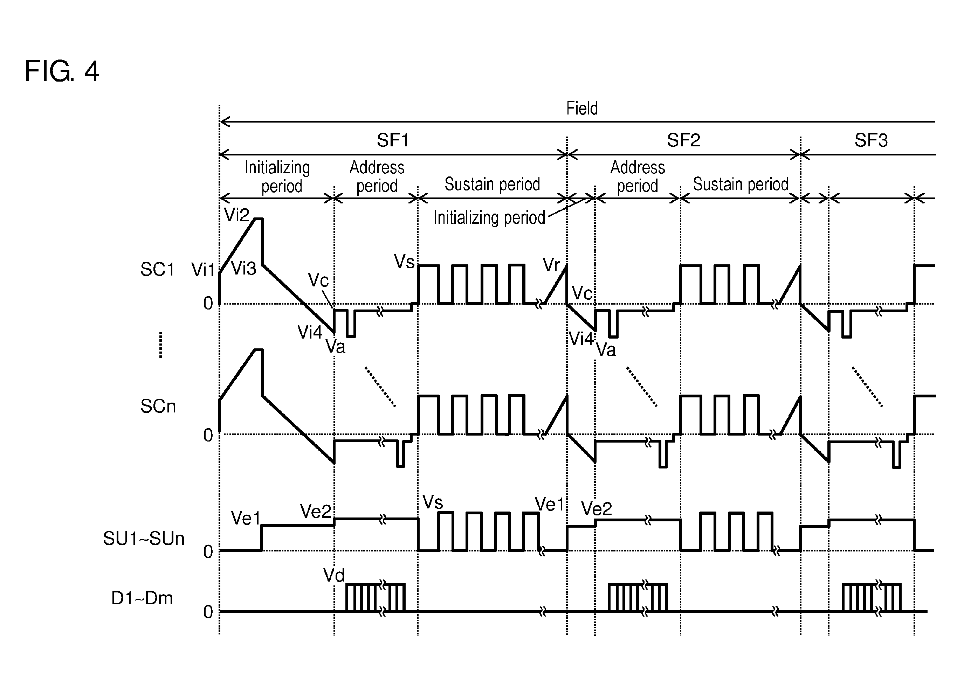

Fig. 4 is a waveform chart of driving voltage to be applied to each electrode of panel 10 in accordance with the first exemplary embodiment of the present invention, and shows driving voltage waveforms in SF 1 through SF3.

In the first half of the initializing period of SF1 in which the forced initializing operation is performed, voltage 0 (V) is applied to data electrode D 1 through data electrode Dm and voltage 0 (V) is applied to sustain electrode SU1 through sustain electrode SUn. Ramp waveform voltage, which gently increases from voltage Vi1 to voltage Vi2, is applied to scan electrode SC1 through scan electrode SCn. Here, voltage Vi1 is not higher than a discharge start voltage with respect to sustain electrode SU1 through sustain electrode SUn. Voltage Vi2 is higher than the discharge start voltage with respect to sustain electrode SU1 through sustain electrode SUn. While the ramp waveform voltage increases, feeble initializing discharge occurs between scan electrode SC1 through scan electrode SCn and sustain electrode SU1 through sustain electrode SUn, and feeble initializing discharge occurs between scan electrode SC1 through scan electrode SCn and data electrode D1 through data electrode Dm. Negative wall voltage is accumulated on scan electrode SC1 through scan electrode SCn, and positive wall voltage is accumulated on data electrode D1 through data electrode Dm and sustain electrode SU1 through sustain electrode SUn. The wall voltage on the electrodes shows the voltage that is generated by wall charge accumulated on the dielectric layer for covering the electrodes, the protective layer, and the phosphor layer.

In the latter half of the initializing period, positive voltage Ve1 is applied to sustain electrode SU1 through sustain electrode SUn, and ramp waveform voltage, which gently decreases from voltage Vi3 to voltage Vi4, is applied to scan electrode SC1 through scan electrode SCn. Here, voltage Vi3 is not higher than the discharge start voltage with respect to sustain electrode SU1 through sustain electrode SUn. Voltage Vi4 is higher than the discharge start voltage with respect to sustain electrode SU1 through sustain electrode SUn. While the ramp waveform voltage decreases, feeble initializing discharge occurs between scan electrode SC1 through scan electrode SCn and sustain electrode SU1 through sustain electrode SUn, and feeble initializing discharge occurs between scan electrode SC1 through scan electrode SCn and data electrode D 1 through data electrode Dm. The negative wall voltage on scan electrode SC1 through scan electrode SCn and the positive wall voltage on sustain electrode SU1 through sustain electrode SUn are reduced, and positive wall voltage on data electrode D 1 through data electrode Dm is adjusted to a value appropriate for an address operation. Thus, the forced initializing operation of forcibly performing initializing discharge in all discharge cells is completed.

In the subsequent address period, voltage Ve2 is applied to sustain electrode SU1 through sustain electrode SUn, and voltage Vc is applied to scan electrode SC1, scan electrode SC2, ... , and scan electrode SCn.

Next, a scan pulse of negative voltage Va is applied to first scan electrode SC1, and an address pulse of positive voltage Vd is applied to data electrode Dk (k is 1 through m) in the discharge cell to emit light in the first row, of data electrode D 1 through data electrode Dm. At this time, the voltage difference in the intersecting part of data electrode Dk and scan electrode SC1 in the discharge cell to which an address pulse has been applied is derived by adding difference between the wall voltage on data electrode Dk and the wall voltage on scan electrode SC1 to difference (Vd-Va) of the external applied voltage, and exceeds the discharge start voltage. Address discharge occurs between data electrode Dk and scan electrode SC1 and address discharge thus occurs between sustain electrode SU1 and scan electrode SC1, positive wall voltage is accumulated on scan electrode SC1, negative wall voltage is accumulated on sustain electrode SU1, and negative wall voltage is also accumulated on data electrode Dk. Thus, the address operation of causing the address discharge in the discharge cell to emit light in the first row and accumulating wall voltage on each electrode is performed. While, the voltage in the part where the data electrode to which no address pulse has been applied intersects with scan electrode SC1 does not exceed the discharge start voltage, so that the address discharge does not occur.

A similar address operation is performed for scan electrode SC2, scan electrode SC3, ..., and scan electrode SCn.

In the subsequent sustain period, a sustain pulse of voltage Vs is applied to scan electrode SC1 through scan electrode SCn, and voltage 0 (V) is applied to sustain electrode SU1 through sustain electrode SUn. In the discharge cell having undergone the address discharge, the voltage difference between scan electrode SCi and sustain electrode SUi is derived by adding the difference between the wall voltage on scan electrode SCi and that on sustain electrode SUi to voltage Vs, and exceeds the discharge start voltage. Thus, sustain discharge occurs between scan electrode SCi and sustain electrode SUi, and ultraviolet rays generated at this time cause phosphor layer 35 to emit light. Negative wall voltage is accumulated on scan electrode SCi, and positive wall voltage is accumulated on sustain electrode SUi. Positive wall voltage is also accumulated on data electrode Dk. In the discharge cell having undergone no address discharge in the address period, sustain discharge does not occur and the wall voltage at the end of the initializing period is kept.

Subsequently, voltage 0 (V) is applied to scan electrode SC1 through scan electrode SCn, and a sustain pulse of voltage Vs is applied to sustain electrode SU1 through sustain electrode SUn. Since the voltage difference between sustain electrode SUi and scan electrode SCi exceeds the discharge start voltage in the discharge cell having undergone the sustain discharge, sustain discharge occurs again between sustain electrode SUi and scan electrode SCi, negative wall voltage is accumulated on sustain electrode SUi, and positive wall voltage is accumulated on scan electrode SCi. Thus, as many sustain pulses as the number corresponding to the luminance weight are alternately applied to scan electrode SC1 through scan electrode SCn and sustain electrode SU1 through sustain electrode SUn. Sustain discharge is continuously caused in the discharge cell having undergone the address discharge in the address period.

At the end of the sustain period, ramp waveform voltage, which gently increases to voltage Vr, is applied to scan electrode SC1 through scan electrode SCn, and the wall voltage on scan electrode SCi and that on sustain electrode SUi are reduced while the positive wall voltage on data electrode Dk is kept. Thus, the sustain operation in the sustain period is completed.

In the initializing period of SF2, in which the selective initializing operation is performed, voltage Ve1 is applied to sustain electrode SU1 through sustain electrode SUn, voltage 0 (V) is applied to data electrode D1 through data electrode Dm, and ramp waveform voltage, which gently decreases to voltage Vi4, is applied to scan electrode SC1 through scan electrode SCn. At this time, in the discharge cell having undergone sustain discharge in SF1 as the immediately preceding subfield, feeble initializing discharge occurs, and the wall voltage on scan electrode SCi and that on sustain electrode SUi are reduced. Sufficient positive wall voltage is accumulated on data electrode Dk by the immediately preceding sustain discharge, so that the excessive part of the wall voltage is discharged and the wall voltage is adjusted to a value appropriate to the address operation. While, discharge does not occur in the discharge cell having undergone no sustain discharge in the immediately preceding subfield, and the wall voltage at the end of the initializing period of the immediately preceding subfield is kept. Thus, in the selective initializing operation, the initializing discharge is selectively performed in the discharge cell having undergone the address operation in the address period of the immediately preceding subfield, namely in the discharge cell having undergone the sustain operation in the sustain period of the immediately preceding subfield.

The operation of the subsequent address period is similar to that of the address period of SF1, and the descriptions of it are omitted. The operation of the subsequent sustain period is similar to that of the sustain period of SF1 except for the number of sustain pulses. Operations of subsequent SF3 through SF5 are similar to the operation of SF2 except for the number of sustain pulses.

In the present embodiment, the following voltage values are applied to respective electrodes, for example. Voltage Vi1 is 145 (V), voltage Vi2 is 335 (V), voltage Vi3 is 190 (V), voltage Vi4 is -160 (V), voltage Va is -180 (V), voltage Vc is -35 (V), voltage Vs is 190 (V), voltage Vr is 190 (V), voltage Ve1 is 125 (V), voltage Ve2 is 130 (V), and voltage Vd is 60 (V). These voltage values are simply one example, and preferably are set at optimal values based on the characteristics of panel 10 and the specification of plasma display apparatus 40.

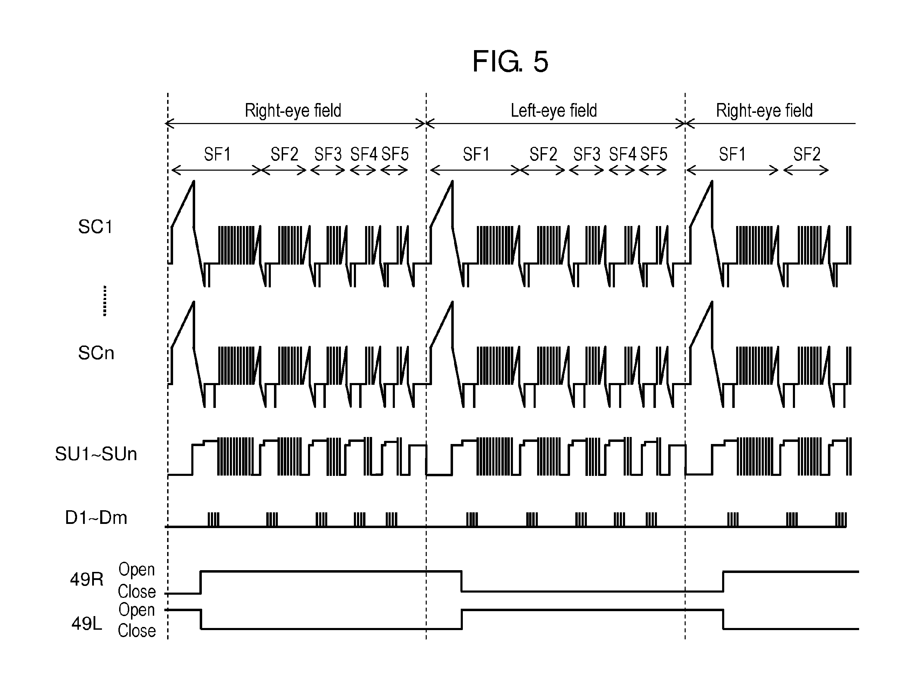

Next, the subfield structure of plasma display apparatus 40 of the present embodiment is described again. Fig. 5 is a pattern diagram showing a subfield structure in accordance with the first exemplary embodiment of the present invention. In the present embodiment, in order to display 3D images, the field frequency is set at 120 Hz, namely twice the normal frequency, and right-eye fields and left-eye fields are alternately arranged. Five subfields (SF1, SF2, SF3, SF4, SF5) are disposed in each field. Respective subfields (SF 1, SF2, SF3, SF4, SF5) have luminance weights of (16, 8, 4, 2, 1).

Thus, one field is constituted by five subfields arranged in descending order of the luminance weight in the present embodiment. In other words, the subfield of the largest luminance weight is disposed firstly in the field, the subfield of the second-largest luminance weight is disposed secondly in the field, the subfield of the third-largest luminance weight is disposed thirdly in the field, the subfield of the fourth-largest luminance weight is disposed fourthly in the field, and the subfield of the smallest luminance weight is disposed last in the field. The forced initializing operation is performed in the initializing period of the subfield disposed firstly in the field, and the selective initializing operation is performed in the initializing periods of the other subfields.

Right-eye liquid crystal shutter 49R and left-eye liquid crystal shutter 49L of shutter glasses 48 receive a timing signal output from timing signal output section 46, and control shutter glasses 48 are controlled as below. Right-eye liquid crystal shutter 49R of shutter glasses 48 opens synchronously with the start of the address period in SF1 of the right-eye field, and closes synchronously with the start of the address period in SF1 of the left-eye field. Left-eye liquid crystal shutter 49L opens synchronously with the start of the address period in SF1 of the left-eye field, and closes synchronously with the start of the address period in SF1 of the right-eye field.

By arranging the subfields and controlling shutter glasses 48 in such a manner, the crosstalk between right-eye images and left-eye images can be suppressed, the address discharge can be stabilized, and high-quality 3D images can be displayed. The reason is described below.

The phosphors have characteristics where the intensity of afterglow of the phosphors is proportional to the luminance during the light emission of the phosphors and attenuates at a certain time constant. The light emission luminance in the sustain period is high in a subfield of a large luminance weight, so that, in order to reduce the afterglow, a subfield of a large luminance weight is preferably disposed at an early time of the field. In the present exemplary embodiment, therefore, the subfields are arranged in descending order of the luminance weight, namely from the largest luminance weight, in consideration of suppression of the crosstalk.

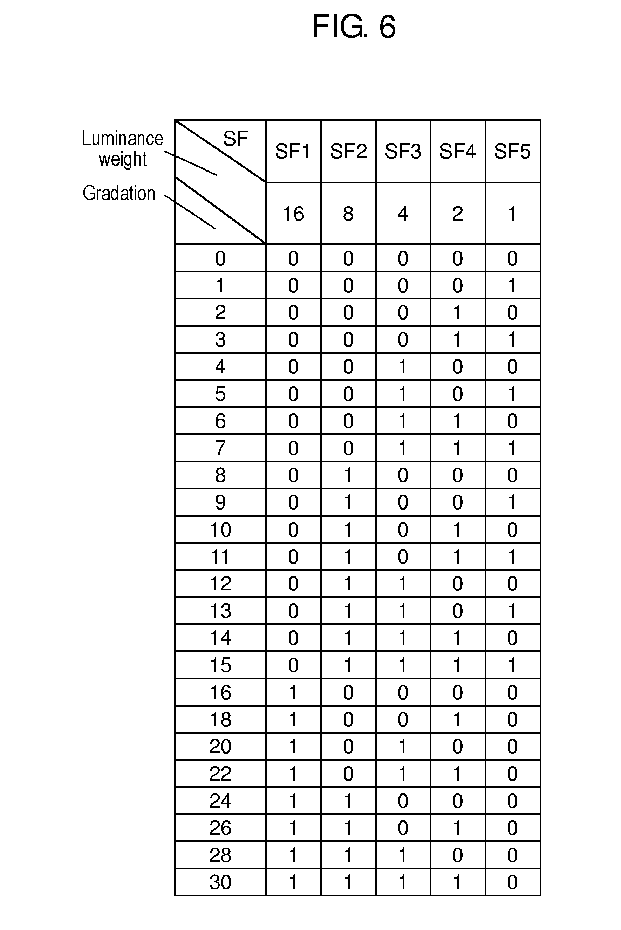

Next, a display method of gradations of the present exemplary embodiment is described. Fig. 6 is a diagram showing the relationship between the gradation to be displayed and the presence/absence of the address operation in the subfield during the display (hereinafter referred to as "coding") in accordance with the first exemplary embodiment of the present invention. In Fig. 6 (and the other diagrams showing coding), "1" indicates the presence of the address operation, and "0" indicates the absence of the address operation.

Plasma display apparatus 40 performs the address operation according to the coding above. For example, in the discharge cell displaying gradation "0", namely black, no address operation is performed in all subfields, namely SF1 through SF5. In this case, in the discharge cell, no sustain discharge is performed and hence the luminance is the lowest.

In the discharge cell for displaying gradation "1", the address operation is performed only in SF5 as the subfield having luminance weight "1", and is not performed in the other subfields. In this case, in the discharge cell, sustain discharge is caused times corresponding to luminance weight "1", and the brightness of gradation "1" is displayed.

In the discharge cell for displaying gradation "7", the address operation is performed in SF3 having luminance weight "4", SF4 having luminance weight "2", and SF5 having luminance weight "1". Then, in this discharge cell, sustain discharge is caused times corresponding to luminance weight "4" in the sustain period in SF3, sustain discharge is caused times corresponding to luminance weight "2" in the sustain period in SF4, and sustain discharge is caused times corresponding to luminance weight "1" in the sustain period in SF5. Therefore, the brightness of gradation "7" is displayed in total.

The other gradations are similar. According to the coding of Fig. 6, the address operation is controlled so that the address operation is performed or is not performed in each subfield.

In the present embodiment, in the discharge cell for displaying gradation that is not lower than "16" as a predetermined threshold, the address operation is prohibited in SF5 as the subfield disposed last in the field, as shown in Fig. 6. Using such a coding, the crosstalk between the right-eye images and left-eye images can be further suppressed. The reason is described below.

As discussed above, the phosphors have characteristics where the intensity of afterglow of the phosphors is proportional to the luminance during the light emission of the phosphors and attenuates at a certain time constant. SF5 is the subfield of the smallest luminance weight, so that the effect on the display luminance is relatively small. However, SF5 is disposed last in the field and has the shortest period after the completion of the sustain period until the switching time of the shutter, as shown in Fig. 5. Therefore, SF5 is the subfield where the effect on the display luminance is small but the effect on the after-image is relatively large.

Thus, in the discharge cell for emitting light at gradation of a threshold or higher, by prohibiting address in SF5 as the subfield where the luminance weight is smallest and is disposed last in the field, the after-image can be effectively suppressed without significantly affecting the display images. Thus, plasma display apparatus 40 can display high-quality 3D images.

In the coding of Fig. 6, gradations "17", "19", "21", etc. cannot be displayed, for example. Such gradations are image-signal-processed using an error diffusion method or dither method, for example. These methods allow these gradations to be displayed falsely.

In the above-mentioned example of coding, when gradation of the threshold or higher is displayed, the address is prohibited only in SF5 that has the smallest luminance weight and is disposed last in the field. However, the present invention is not limited to this.

### SECOND EXEMPLARY EMBODIMENT

The structure of panel 10, circuit block diagram of plasma display apparatus 40, driving voltage waveform applied to each electrode of panel 10, and subfield structure in the second exemplary embodiment of the present invention are the same as those in the first exemplary embodiment. Therefore, the descriptions of them are omitted. The second exemplary embodiment is different from the first exemplary embodiment in coding.

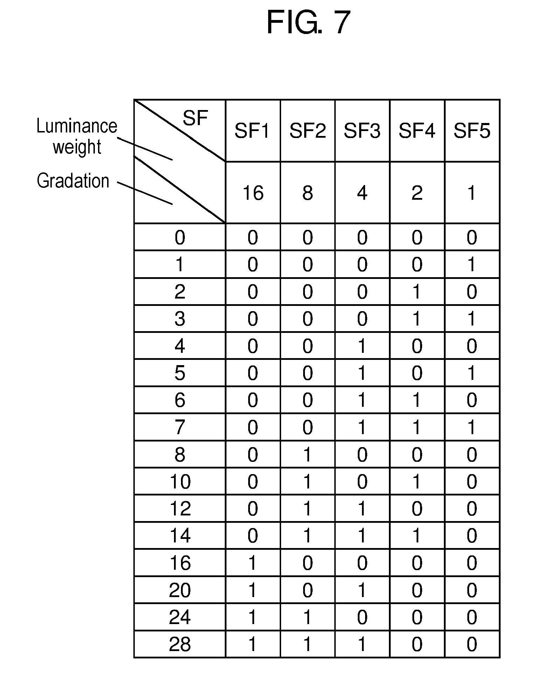

Fig. 7 is a diagram showing the coding in accordance with the second exemplary embodiment of the present invention. In the second exemplary embodiment, two thresholds (for example, gradation "8" and gradation "16") are previously determined. When the gradation to be displayed is not lower than gradation "8" as the first threshold, address is prohibited in the subfield (for example, SF5) disposed last in the field. When the gradation to be displayed is not lower than gradation "16" as the second threshold, address is prohibited also in the subfield (for example, SF4) disposed second-last in the field. In the second exemplary embodiment, using such a coding allows further suppression of the crosstalk between right-eye images and left-eye images.

In the coding of Fig. 7, gradations "9", "11", "13", etc. cannot be displayed in addition to those in the coding of Fig. 6. These gradations can be also falsely displayed by image signal processing using the error diffusion method or dither method.

### THIRD EXEMPLARY EMBODIMENT

The structure of panel 10, circuit block diagram of plasma display apparatus 40, and driving voltage waveform applied to each electrode of panel 10 in the third exemplary embodiment of the present invention are the same as those in the first exemplary embodiment. Therefore, the descriptions of them are omitted. The third exemplary embodiment is different from the first exemplary embodiment and the second exemplary embodiment in the subfield structure.

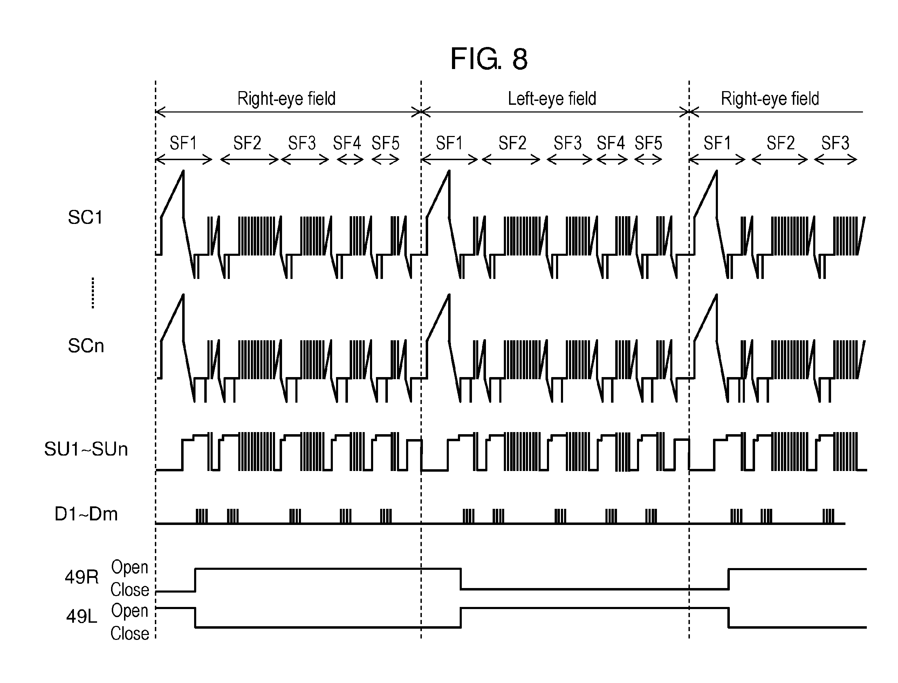

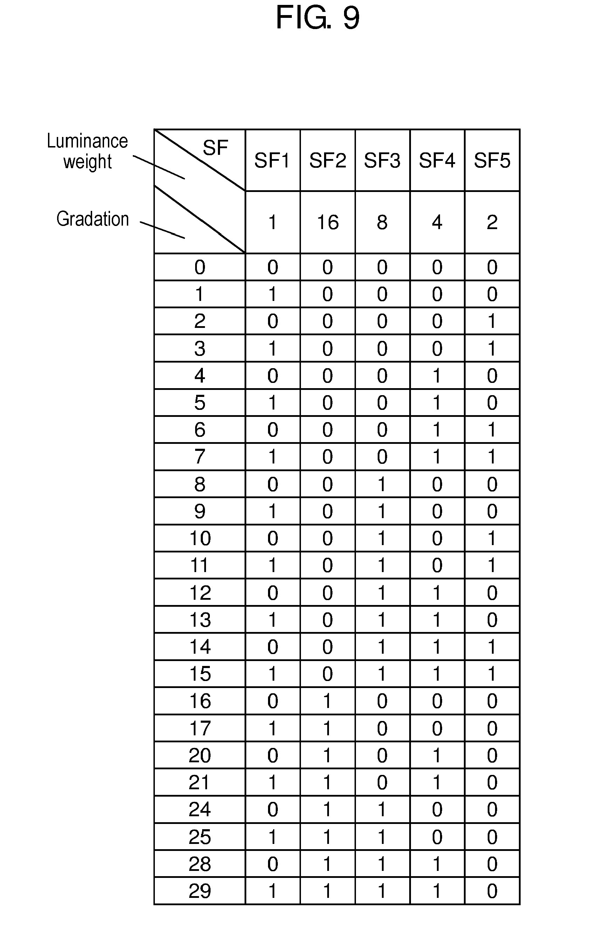

Fig. 8 is a pattern diagram showing a subfield structure in accordance with the third exemplary embodiment of the present invention. Fig. 9 is a diagram showing coding in accordance with the third exemplary embodiment of the present invention.

In the third exemplary embodiment, similarly to the first exemplary embodiment, the field frequency is set at 120 Hz, twice the normal frequency, and the right-eye fields and left-eye fields are alternately arranged. Five subfields (SF1, SF2, SF3, SF4, SF5) are arranged in each field. In the third exemplary embodiment, however, respective subfields (SF1, SF2, SF3, SF4, SF5) have luminance weights of (1, 16, 8, 4, 2). When the gradation to be displayed is not lower than gradation "16" as a predetermined threshold, address is not performed in the subfield (for example, SF5) disposed last in the field.

In the third exemplary embodiment, thus, the subfield of the smallest luminance weight is disposed firstly in the field, then the subfield of the largest luminance weight is disposed, and the subsequent subfields are arranged in descending order of luminance weight. In other words, the subfield of the smallest luminance weight is disposed firstly in the field, the subfield of the largest luminance weight is disposed secondly in the field, the subfield of the second-largest luminance weight is disposed thirdly in the field, the subfield of the third-largest luminance weight is disposed fourthly in the field, and the subfield of the second-smallest luminance weight is disposed last in the field.

By arranging the subfields in that manner, the crosstalk between the right-eye images and left-eye images can be suppressed, the address discharge can be stabilized, and high-quality 3D images can be displayed on panel 10. The reason is described below.

When only the suppression of the crosstalk is considered as discussed above, it is preferable to firstly arrange the subfields of the largest luminance weight.

In the third exemplary embodiment, the subfield of the smallest luminance weight is disposed in SF1 for performing the forced initializing operation in the initializing period. Therefore, the address discharge can be caused before the priming caused by the forced initializing operation disappears. Stable address discharge can be therefore caused even in the discharge cell where light is emitted only in the subfield of the smallest luminance weight. The subsequent subfields are arranged in descending order of the luminance weight from the largest luminance weight. Therefore, the afterglow of the phosphors can be reduced to suppress the crosstalk.

In the first exemplary embodiment through the third exemplary embodiment, one field has five subfields. However, the number of subfields is not limited to the above-mentioned one. For example, when the number of subfields is further increased, the number of gradations capable of being displayed on panel 10 can be further increased. In these exemplary embodiments, the luminance weights of the subfields are set at powers of "2", namely (16, 8, 4, 2, 1). However, the luminance weights of the subfields are not limited to this. When the combination of the subfields for determining the gradation is made flexible (for example, the luminance weights are set at (12, 7, 3, 2, 1)), the coding for suppressing occurrence of the moving image false contour is allowed.

The specific numerical values shown in the first exemplary embodiment through third exemplary embodiment are simply examples. Preferably, these numerical values are set optimally in response to the characteristics of the panel and the specification of the plasma display apparatus.

### INDUSTRIAL APPLICABILITY

The present invention can suppress crosstalk between right-eye images and left-eye images and display high-quality 3D images of, and is useful for a driving method of a plasma display apparatus, a plasma display apparatus, and a plasma display system

### REFERENCE MARKS IN THE DRAWINGS

10 panel
22 scan electrode
23 sustain electrode
24 display electrode pair
32 data electrode
40 plasma display apparatus
41 image signal processing circuit
42 data electrode driver circuit
43 scan electrode driver circuit
44 sustain electrode driver circuit
45 timing generation circuit
48 shutter glasses
49R right-eye liquid crystal shutter
49L left-eye liquid crystal shutter

## Claims

1. A driving method of a plasma display apparatus that includes a plasma display panel having a plurality of discharge cells each of which has a scan electrode, a sustain electrode, and a data electrode, and a driver circuit for driving the plasma display panel, the driving method comprising:
alternately displaying a right-eye image and a left-eye image on the plasma display panel by alternately repeating a right-eye field and a left-eye field, the right-eye field having a plurality of subfields and displaying a right-eye image signal, the left-eye field having a plurality of subfields and displaying a left-eye image signal;
providing each of the subfields with an address period for performing an address operation and a sustain period for performing a sustain operation; and
prohibiting an address operation in a subfield disposed last in a field of a discharge cell for displaying gradation of a predetermined threshold or higher.

2. The driving method of the plasma display apparatus of claim 1, wherein
a timing signal synchronous with the right-eye field and the left-eye field is generated.

3. The driving method of the plasma display apparatus of claim 1, wherein
in each of the right-eye field and the left-eye field, a subfield of a smallest luminance weight is firstly disposed, then a subfield of a largest luminance weight is disposed next to the one having the smallest luminance weight, and subsequent subfields are arranged in descending order of luminance weight.

4. The driving method of the plasma display apparatus of claim 1, wherein
in a discharge cell for performing address discharge in a subfield of one of the right-eye field and the left-eye field, address discharge is performed also in a subfield disposed firstly in the one field.

5. A plasma display apparatus comprising:
a plasma display panel having a plurality of discharge cells each of which has a scan electrode, a sustain electrode, and a data electrode; and
a driver circuit for driving the plasma display panel,
wherein the driver circuit alternately displays a right-eye image and a left-eye image on the plasma display panel by alternately repeating a right-eye field and a left-eye field, the right-eye field having a plurality of subfields and displaying a right-eye image signal, the left-eye field having a plurality of subfields and displaying a left-eye image signal,
wherein each of the subfields includes an address period for performing an address operation and a sustain period for performing a sustain operation; and
wherein an address operation is prohibited in a subfield disposed last in a field of a discharge cell for displaying gradation of a predetermined threshold or higher.

6. The plasma display apparatus of claim 5, wherein
the driver circuit has a timing signal output section for outputting a timing signal synchronous with the right-eye field and the left-eye field.

7. A plasma display system comprising:
a plasma display apparatus including:
a plasma display panel having a plurality of discharge cells each of which has a scan electrode, a sustain electrode, and a data electrode;
a driver circuit for:
alternately displaying a right-eye image and a left-eye image on the plasma display panel by alternately repeating a right-eye field and a left-eye field, the right-eye field having a plurality of subfields and displaying a right-eye image signal, the left-eye field having a plurality of subfields and displaying a left-eye image signal;
providing each of the subfields with an address period for performing an address operation and a sustain period for performing a sustain operation; and
displaying, on the plasma display panel, an image where an address operation is prohibited in a subfield disposed last in the right-eye field or the left-eye field in a discharge cell for displaying gradation of a predetermined threshold or higher; and
a timing signal output section for outputting a timing signal synchronous with the right-eye field and the left-eye field; and
shutter glasses that have a receiving section for receiving the timing signal output from the timing signal output section, a right-eye shutter, and a left-eye shutter, and open and close the right-eye shutter and the left-eye shutter based on the timing signal.
